(19) Europäisches Patentamt
European Patent Office
Office européen des brevets

(11) Veröffentlichungsnummer: 0 274 721 B1

(12) EUROPÄISCHE PATENTSCHRIFT

(45) Veröffentlichungstag der Patentschrift: 15.09.93

(51) Int. Cl.$^5$: C08F 8/32

(21) Anmeldenummer: 87118922.1

(22) Anmeldetag: 21.12.87

# (54) Aminogruppenhaltige Polymerisate, ihre Herstellung und ihre Verwendung.

(30) Priorität: 24.12.86 DE 3644373

(43) Veröffentlichungstag der Anmeldung:
20.07.88 Patentblatt 88/29

(45) Bekanntmachung des Hinweises auf die Patenterteilung:
15.09.93 Patentblatt 93/37

(84) Benannte Vertragsstaaten:
AT BE CH DE ES FR GB IT LI NL

(56) Entgegenhaltungen:
EP-A- 0 158 881
DE-A- 1 595 501

(73) Patentinhaber: HOECHST AKTIENGESELL-SCHAFT

D-65926 Frankfurt(DE)

(72) Erfinder: Brindöpke, Gerhard, Dr.
Loreleistrasse 18
D-6230 Frankfurt am Main 80(DE)
Erfinder: Hönel, Michael, Dr.
Wallstrasse 24
D-6500 Mainz(DE)

EP 0 274 721 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Härtbare Polymerisate mit Aminogruppen sind bekannt. Sie können beispielsweise durch Copolymerisation von Aminoalkylestern ungesättigter Carbonsäuren erhalten werden (J. Coat. Techn. 54, (1982) S. 33 bis 41)). Die Aminoalkylester sind jedoch nicht leicht zugänglich und sind im Falle der Produkte mit primären und sekundären Aminogruppen wenig lagerstabil. Erhältlich sind daher nur aminoalkylester, die tertiäre Aminogruppen besitzen.

Aminogruppenhaltige Copolymerisate lassen sich auch durch Umsetzung von epoxidgruppenhaltigen Copolymerisaten mit primären oder sekundären Aminen (vergl. die vorstehend genannte Literaturstelle sowie DE-Offenlegungschrift 3436346) herstellen. Diese Verfahren ist jedoch wenig selektiv und liefert ein Gemisch von unterschiedlich alkylierten Produkten.

Für eine selektive Umsetzung ist es erforderlich, daß mit einem Überschuß an Amin gearbeitet wird, das nach beendeter Reaktion destillativ entfernt werden muß. Produkte mit nur sekundären Aminogruppen sind aber durch diese Verfahrensweise nicht herstellbar.

Polymerisate mit definierten primären Aminogruppen lassen sich durch Hydrolyse von isocyanathaltigen Copolymerisaten herstellen (DE-Offenlegungsschrift 3229047). Dieses Verfahren besitzt den prinzipiellen Nachteil, daß ein Teil des aufgebauten Polymerisates durch die Hydrolysereaktion wieder abgebaut wird.

Technisch interessant und wertvoll sind solche Polymerisate, die keine tertiären Aminogruppen enthalten, da diese Gruppen nach einer lacküblichen Härtungsreaktion unverändert im Lackfilm verbleiben und aufgrund ihrer Basizität den Abbau des Lackes speziell unter Witterungs- oder Säureeinflüssen beschleunigen.

In der SU-Patentschrift 413 824, in den DE-Offenlegungsschriften 36 17 705 und 36 24 454 sowie in der JP-Offenlegungsschrift 72/202-318 werden Umsetzungen von cyclischen Carbonaten mit primären aliphatischen Aminen unter Bildung von nichtbasischen Urethanen beschrieben. Die verwendeten cyclischen Carbonate sind aber in der Regel nur bifunktionell und leiten sich von Glycidylethern ab, die Phenol- oder Glykolether als Grundstrukturen enthalten und die nur ungenügende Beständigkeiten gegenüber Witterungseinflüssen aufweisen.

Es war daher Aufgabe der vorliegenden Erfindung, solche Copolymerisate mit Aminogruppen bereitzustellen, die definierte Mengen an primären und/oder sekundären und/oder tertiären Aminogruppen enthalten, ohne daß die Einführung dieser Aminogruppen eine Hydrolysereaktion erfordert, und die gehärtete Lackfilme mit ausreichender Beständigkeit insbesondere gegenüber Witterungseinflüssen und Säureeinwirkung ermöglichen.

Die vorliegende Erfindung betrifft daher nichtvernetzte Umsetzungsprodukte aus
Verbindungen (A), die in statistischer Verteilung 1,3-Dioxolan-2-on-Gruppen tragende Struktureinheiten (a) enthalten und
Verbindungen (B), die mindestens eine primäre aliphatische oder cycloaliphatische Aminogruppe und zusätlich midestens eine weitere basische Aminogruppe enthalten.

Weiterhin bezieht sich die Erfindung auf die Verwendung dieser Umsetzungsprodukte als Bestandteil insbesondere von Lacken, vor allem Elektrotauchlacken.

Der Begriff "nichtvernetzt" soll hier bedeuten, daß die erfindungsgemäßen Umsetzungsprodukte in mindestens einem organischen Lösungsmittel klarlöslich sind.

Bei den 1,3-Dioxolan-2-on -Gruppen enthaltenden Struktureinheiten (a) der Verbindung (A) handelt es sich um solche der allgemeinen Formel (I)

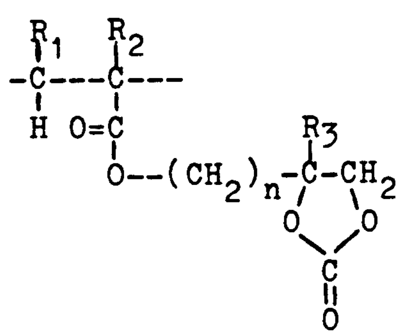

(I),

in der n für eine Zahl von 1 bis 6, vorzugsweise 1, und $R_1$ für H, Alkyl mit 1 bis 10 C-Atomen, vorzugsweise 1 bis 6 C-Atomen, oder COOR″ (R″ = Alkyl wie vorstehend) stehen, $R_2$ unabhängig davon H oder Alkyl wie

vorstehend bedeutet und $R_3$ H, Methyl oder Ethyl darstellt. Typische Vertreter hierfür sind (2-Oxo-1,3-dioxolan-4-yl)-methylacrylat, (2-Oxo-1,3-dioxolan-4-yl)-methylmethacrylat, (2-Oxo-1,3-dioxolan-4-yl)-methylitaconat, (2-Oxo-1,3-dioxolan-4-yl)methylmaleat.

Die Menge der Struktureinheiten (a) beträgt im allgemeinen 1 bis 99, vorzugsweise 2 bis 80 Gew.-% und insbesondere 5 bis 60 Gew.-%, jeweils bezogen auf die Verbindung (A). Diese Struktureinheiten sind statistisch über die Molekülkette verteilt, wobei der Begriff "statistisch" auch eine Blockverteilung einschließen soll.

Daneben enthält die Verbindung (A) noch weitere Struktureinheiten (b) in Mengen von insgesamt 99 bis 1 Gew.-%, vorzugsweise 95 bis 20 Gew.-% und insbesondere 92 bis 40 Gew.-% (bezogen auf (A)), die sich ableiten von mindestens einem der nachstehenden Monomeren:

($b_1$) Olefine, wie Ethylen, Propylen;

($b_2$) vinylaromatische Kohlenwasserstoffe, wie vorzugsweise Styrol oder substituierte Styrole, wie $\alpha$-Methylstyrol und p-Methylstyrol;

($b_3$) hydroxylguppenhaltige oder glycidylguppenhaltige Ester mit 1 bis 18 C-Atomen im Alkoholrest einer ungesättigten Mono- oder Dicarbonsäure, wie der Acryl- und Methacrylsäure ( = Meth)-acrylsäure), Fumar-, Malein-oder Itaconsäure, wobei (Meth)acrylsäure bevorzugt ist. Beispiele hierfür sind Ester dieser Säuren mit Ethylenglykol, Propylenglykol-1,2 oder -1,3, Butylenglykol-1,4 Trimethylkolpropan, Glycerin udgl.; weiterhin Umsetzungsprodukte dieser Säuren mit endständigen Epoxiden, wie z.B. Hexenoxid oder Dodecenoxid sowie Umsetzungprodukte dieser Säuren mit Glycidylestern, vorzugsweise von in $\alpha$-Stellung verzweigten, gesättigten aliphatischen Monocarbonsäuren mit 8 - 14 C-Atomen, wie z.B. ®Cardura E 10 (Glycidylester der "Versaticsäure"). Sofern entsprechende Ester von ungesättigten Dicarbonsäuren verwendet werden, sollen diese nur eine C = C-Doppelbindung enthalten. Besonders bevorzugt sind Hydroxyethyl- oder Hydroxypropyl(meth)acrylat. Besonders elastische Eigenschaften sind beim Einsatz eines Reaktionsproduktes von Hydroxyalkyl-(meth)acrylat mit $\epsilon$-Caprolacton zu erhalten.

($b_4$) Ester, Amide oder Nitrile von ungesättigten Mono- oder Dicarbonsäuren. Die Ester sind dabei bevorzugt. Als Säuren kommen die gleichen wie vorstehend unter ($b_3$) genannt in Frage. Die Alkoholkomponente in den Estern enthält im allgemeinen 1 bis 18, vorzugsweise 1 bis 13 C-Atome. Beispiele hierfür sind: Methyl-, Ethyl-, Butyl-, 2-Ethylhexyl- Lauryl- oder Stearylester der (Meth)acrylsäure. Als Alkoholkomponente sind auch Fettalkohole, Cycloalkohole, Monalkylether von Ethylen- oder Propylenglykolen sowie Versaticalkohol geeignet.

Daneben sind auch substituierte und unsubstituierte Amide dieser Säuren geeignet. Substituierte Amide können sein: Mono- und Dialkylamide mit 1 - 10 C-Atomen im Alkylrest, veretherte und unveretherte Hydroxyalkylamide mit 1 - 6 C-Atomen im Alkyl- und im Etherteil, Mono-und Dialkylaminoalkylamide mit 1 - 6 C-Atomen im Alkylrest. Konkret genannt seien hier: (Meth)acrylsäureamid, N-Methylol(meth)acrylamid sowie entsprechende Ether wie N-Methylol(meth)acrylamidmethyl-oder -butylether, Hydroxyethyl- oder Hydroxypropyl(meth)acylamid, 2-t-Butylaminoethylmethacrylamid,

Als Nitril ist beispielsweise (Meth)acrylnitril zu nennen;

($b_5$) ungesättigte Ester einer vorzugsweise in $\alpha$-Stellung verzweigten aliphatischen, gesättigten Monocarbonsäure, beispielsweise Vinylester von Carbonsäuren mit 2 bis 20, vorzugsweise 2 bis 6 C-Atomen, wie Vinylacetat, Vinylpropionat, Vinyllinolat. Vorzugsweise handelt es sich hierbei jedoch um Vinylester von in $\alpha$-Stellung verzweigten Carbonsäuren mit 8 bis 14 C-Atomen, insbesondere $\alpha$-Monoalkan- oder$\alpha$-Dialkanmonocarbonsäuren wie die sogenannten "Versaticsäuren" (Vinylversatat);

($b_6$) Vinylverbinungen (andere als Vinylester), wie Vinylether, beispielsweise Methyl-, Ethyl- oder Alkylvinylether mit Alkylresten mit 3 bis 6 Kohlenstoffatomen; N-Vinylpyrrolidon;

Wenn das Aminogruppen enthaltende Acrylatharz als alleiniges, selbstvernetzendes Bindemittel verwendet werden soll, können auch gleich Monomere zur Herstellung der Verbindung (A) eingesetzt werden, die verkappte Isocyanatgruppen ($b_7$) enthalten. Als copolymerisiebare Monomer mit verkappten Isocyanatgruppen sind zum Beispiel Vinylurethane zu nennen, die durch Umsetzung von Vinylisocyanat mit üblichen Verkappungsmitteln entstehen. Als Beispiele seien hier genannt; N-Vinylcarbaminsäure-tert-butylester, N-Vinylcarbaminsäure-cyclohexylestere, N-Vinylcarbaminsäure-$\epsilon$-Caprolactam-Addukt. Solche Monomere können aber auch durch Umsetzung von halbverkappten Polyisocyanaten mit hydroxylgruppenhaltigen Estern von ungesättigten Carbonsäuren erhalten werden. Derartige hydroxylgruppenhaltige Ester sind beispielsweise solche gemäß ($b_3$) oben. Die halbverkappten Polyisocyanate sind Umsetzungsprodukte der bekannten Polyisocyanate, wie Toluylen-, Isophorondiisocyanat etc. oder entsprechender Präpolymerer, mit geeigneten Verkappungsmitteln, wobei nur eine der Isocyanatgruppen nicht umgesetzt wird. Das copolymerisierbare Monomere wird dann in einem zweiten Schritt durch Umsatz der freien Isocyanatgruppe mit dem hydroxylgruppenhaltigen Ester der ungesättigten Säure erhalten. Auch die umgekehrte Verfahrensweise ist möglich. die Umsetzung mit den halbverkappten Isocyanaten kann aber auch erst nach der Polymerisation erfolgen.

Als Verkappungsmittel eignen sich aliphatische, cycloaliphatische oder alkylaromatische (einwertige) Alkohole z.B. niedere aliphatische Alkohole wie Methyl-, Ethyl-, die verschiedenen Propyl-, Butyl- und Hexylalkohole, Heptyl-, Octyl-, Nonyl-, Decylalkohole und ähnliche, ferner ungesättigte Alkohole, wie Allylalkohole, cycloaliphatische Alkohole wie Cyclopentanol, Cyclohexanol, alkylaromatische Alkohole wie Benzylalkohol, Methyl- sowie p-Methoxy- und p-Nitrobenzylalkohol und Monoether von Glykolen wie Ethylenglykolmonoethylether, -monobutylether und ähnliche. Weitere Verkappungsmittel sind Ketoxime wie z. B. Methylethylketonoxim, Acetonoxim, sowie längerkettige Oxime mit vorzugsweise bis zu 10 C-Atomen, wie Methyl-n-amylketoxim und dibutylketoxim, weiterhin Cyclohexanonoxim, Phenole, CH-acide Verbindungen wie Malonsäurealkylester, Acetylaceton, Acetessigester sowie Cyanessigester mit jeweils 1 bis 4 C-Atomen in der Estergruppe, NH-acide Verbindungen wie Caprolactam, Imidazoline, Triazole, Hydroxamsäureester, Aminoalkohole wie Diethylethanolamin. Auch Gemische dieser Verkappungsmittel sind möglich.

Bezüglich der obigen Monomeren ($b_1$) bis ($b_6$) bzw. ($b_7$) können jeweils auch Gemische innerhalb der einzelnen Gruppen eingesetzt werden.

Bei den Verbindungen (A) handelt es sich um Polymere, deren Molekulargewicht $\overline{M}_w$ (Gewichtsmittel, bestimmt mit der Gelchromatographie, Polystyrolstandard) im allgemeinen zwischen 1000 und 50000, vorzugsweise zwischen 3000 und 30000 liegt.

Typische Vertreter der Verbindungen (A) sind solche, die folgende Struktureinheiten enthalten:

2-(Oxo-1,3-dioxolan-4-yl)methyl(meth)acrylat/2-Hydroxy-ethyl(meth)acrylat/Butyl(meth)acrylat/Ethylhexyl-(meth)acrylat;

(2-Oxo-1,3-dioxolan-4-yl)methyl(meth)acrylat/2-Hydroxy-ethyl(meth)acrylat/Butyl(meth)acrylat/Ethylhexyl-(meth)acrylat/Styrol;

4-(2-Oxo-1,3-dioxolan-4-yl)methylitaconat/2-Hydroxy-ethyl(meth)acrylat/Butyl(meth)acrylat/Ethylhexyl(meth)-acrylat;

4-(2-Oxo-1,3-dioxolan-4-yl)methylitaconat/2-Hydroxy-ethyl(meth)acrylat/Butyl(meth)acrylat/Ethylhexyl(meth)-acrylat/Styrol;

(2-Oxo-1,3-dioxolan-4-yl)methylmaleat/2-Hydroxy-ethyl(meth)acrylat/Butyl(meth)acrylat/Ethylhexyl(meth)-acrylat;

(2-Oxo-1,3-dioxolan-4-yl)methylacrylat/1,4-Butandiolmonoacrylat/2-Ethylhexylacrylat/Styrol;

(2-Oxo-1,3-dioxolan-4-yl)methylmethacrylat/2-Hydroxypropyl-methacrylat/Methylmethacrylat/Styrol;

(2-Oxo-1,3-dioxolan-4-yl)methylmethacrylat/Methacrylsäurelaurylester/2-Ethoxyethylmethacrylat/Styrol;

(2-Oxo-1,3-dioxolan-4-yl)methylmethacrylat/Umsetzungsprodukt Cadura E 10 mit Acrylsäure/Styrol/Methylmethacrylat/Hydroxy-ethylmethacrylat;

(2-Oxo-1,3-dioxolan-4-yl)methylmethacrylat/2-Methoxyethyl-acrylat/2-Hydroxypropylacrylat/n-Butylmethacrylat/Styrol;

(2-Oxo-1,3-dioxolan-4-yl)methylmethacrylat/n-Butylacrylat/t-Butylacrylat/Methylmethacrylat/Hydroxyethylmethacrylat.

Die Verbindungen (A) können erfindungsgemäß durch Copolymerisation der Monomeren entsprechend (a) mit den denjenigen entsprechend (b) hergestellt werden. Die 1,3-Dioxolan-2-Gruppen tragenden Monomeren (a) vorzugsweise diejenigen der Formel (I), können dabei durch Anlagerung von $CO_2$ and die entsprechenden Glycidylester ungesättigter Carbonsäuren, wie (Meth)Acrylsäure, Maleinsäure, Fumarsäure etc., erhalten werden. Derartige Verfahren sind beispielsweise in der PCT(WO)-Patenanmeldung 84/03 701 sowie in den DE-Offenlegungsschriften 35 29 263 und 36 00 602 beschrieben. Auf deren Offenbarung, einschließlich der bevorzugten Ausführungsformen, wird hier Bezug genommen.

Die Copolymerisation erfolgt dabei in bekannter Weise vorzugsweise nach dem Radikalkettenmechanismus und nach den üblichen Methoden der Substanz-, Lösungs-, Fällungs-, Dispersions-, Emulsions- oder Perlpolymerisation. Bevorzugt sind die Substanz-, Lösungs- oder Emulsionspolymerisation. Zur Auslösung der Polymerisation werden übliche radikalbildende Initiatoren verwendet. Geeignete Initiatoren sind beispielsweise Wasserstoffperoxid, organische Hydroperoxide und Peroxide, wie Di-tert. Butylperoxid, Caproylperoxid, Lauroylperoxid, Dibenzoylperoxid, t-Butylperbenzoat, Dicumylperoxid, p-Methanhydroperoxid, tert. Butylhydroperoxid, Cumolhydroperoxid, Bernsteinsäureperoxid, ferner unter Polymerisationsbedingungen in Radikale zerfallende aliphatische Azoverbindungen, wie 2,2-Azo-bis-2,4-dimethylvaleronitril, 2,2-Azo-bis-isobutyronitril und analoge Azonitrile. Die Initiatoren werden im allgemeinen in einer Menge von 0,05 bis 5 Gew.-%, vorzugsweise 0,1 bis 3,0 Gew.-%, bezogen auf die Monomerenmenge, verwendet. Die optimale Menge und der optimal wirksame Inititator lassen sich durch Versuche leicht ermitteln.

Der Initiator kann zusammen mit den Monomeren allmählich zudosiert werden. Ein Teil des Initiators kann beispielsweise im Falle der Sustanzpolymerisation auch teilweise zu den vorgelegten Substanzen

gegeben werden.

In gewissen Fällen kann es wünschenswert sein, der Polymerisationsmischung auch andere, die Kettenlänge modifizierende Mittel (Regler) zuzugeben, wie Mercaptane, dimerisiertes α-Methylstyrol und ähnliche. Von diesen Verbindungen werden im allgemeinen 0,1 bis 5,0 Gew.-%, vorzugsweise 0,1 bis 3,0 Gew.-%, bezogen auf Gesamtmenge der Monomeren, verwendet.

Wird in Lösung polymerisiert, so kommen hierfür die üblichen, unter den Polymerisationsbedingungen inerten organischen Lösemittel in Betracht, wie beispielsweise halogenierte Kohlenwasserstoffe, Ether, wie Diethylether, Diethylenglykoldimethylether, Tetrahydrofuran oder Dioxan, Ketone, wie beispielsweise Methylethylketon, Aceton, Cyclohexanon etc., Ester wie Butylacetat, Ethylglykolacetat, Methylglykolacetat, Methoxypropylacetat, ein- und mehrwertige Alkohole, wie Ethanol, Isopropanol, sek. Butanol, tert. Butanol, Diacetonalkohol, Ethylenglykol, Ethylenglykolmonoethylether, Ethylenglykol-monobutylether, Diethylenglykol, Triethylenglykol, Propylenglykol, Propylenglykol-monomethylether, Dipropylenglykol-monomethylether, aliphatische oder aromatische Kohlenwasserstoffe, wie Hexan, Heptan, Cyclohexan, Benzol, Xylol und Toluol. Die Lösenmittel können dabei einzeln oder im Gemisch eingesetzt werden.

Die Copolymerisation kann im weiten Temperaturbereich von etwa 20 bis 250 °C, vorzugsweise 60 bis 180 °C bei Reaktionszeiten von 4 bis 16 Stunden, vorzugsweise bis 10 Stunden durchgeführt werden. Üblicherweise wird dabei Normaldruck angewandt, jedoch können in manchen Fällen höhere Drucke von Vorteil sein.

Die Herstellung der Komponente (A) kann auch in der Weise erfolgen, das geeignete Oligomere oder Polymere, die eine genügende Zahl von statistisch verteilten Glycidyl(Epoxid)gruppen aufweisen, beispielsweise glycidylmethacrylathaltige Polymerisate, die - wie oben beschrieben - durch Copolymerisation hergestellt werden, in Gegenwart eines Katalysators in bekannter Weise mit $CO_2$ umgesetzt worden (vgl. die oben genannten Literaturstellen). Dabei werden alle oder nur ein Teil der Glycidyl(Epoxid)gruppen in 1,3-Dioxolan-2-on-Gruppen umgewandelt.

Als Verbindung (B) zur Herstellung der erfindungsgemäßen Umsetzungsprodukte kommen Polyamine in Frage, die vorzugsweise eine primäre Aminogruppe oder zwei primäre Aminogruppen enthalte, beispielsweise solche der Formel (II)

$H_2N-(R_3NH)_m-R_4$ (II),

in der

m Null oder eine ganze Zahl von 1 bis 6, vorzugsweise 1 bis 4, ist,

$R_3$ einen zweiwertigen, nichtaromatischen Kohlenwasserstoffrest mit 2 bis 18 C-Atomen, vorzugsweise einen verzweigten oder unverzweigten Alkylenrest mit 2 bis 10 C-Atomen, insbesondere 2 bis 6 C-Atomen, oder einen Cycloalkylenrest mit 6 bis 12 C-Atomen, vorzugsweise 6 bis 10 C-Atomen, oder einen Aralkylenrest mit 8 bis 12 C-Atomen, vorzugsweise 8 bis 10 C-Atomen, darstellt und

$R_4$ für H oder

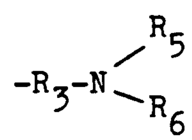

steht, worin $R_3$ die gleiche Bedeutung wie vorstehend hat und

$R_5$, $R_6$ entweder unabhängig voneinander für H, $(C_1-C_{20})$Alkyl, vorzugsweise $(C_1-C_6)$Alkyl, Hydroxy$(C_1-C_{16})$Alkyl, vorzugsweise

$-CH_2-\underset{OH}{CH}-R_6$ ($R_6$ = H, $(C_1-C_{12})$Alkyl, $-CH_2-O-(C_1-C_{12})$Alkyl, $-CH_2-O-$Aryl, $CH_2-O-\underset{O}{\overset{\|}{C}}-(C_1-C_{12})$Alkyl) oder $CH_2-\underset{R_7}{CH}-CN$ ($R_7$ = H oder $(C_1-C_6)$Alkyl)

stehen oder
$R_5$ und $R_6$ Teil eines 5-, 6- oder 7-gliedrigen aliphatischen Ringes sind, mit der Maßgabe, daß bei m gleich Null $R_4$ nicht gleich H ist.

Beispiele für Polyamine der Formel (II) sind: Ethylendiamin, Propylendiamin, 2-Methylpentamethylendiamin, Hexamethylendiamin, Octamethylendiamin, Triacetondiamin, Dioxadecandiamin, Dioxadodecandiamin und höhere Homologe, cycloaliphatische Diamine wie 1,4-Cyclohexandiamin; 4,4-Methylen-bis-cyclohexylamin, 4,4-Iso-propylen-bis-cyclohexylamin, Isophorondiamin, m-Xylylendiamin, N-Methylethylendiamin, Hydroxyethylaminoethylamin, -propylamin, N-Aminoethylpiperazin, N,N-Dimethylethylendiamin, -propylendiamin, N,N-Dihydroxyethylethylendiamin und ähnliche. Weiterhin Umsetzungsprodukte von Diaminen wie z.B. Ethylendiamin, Propylendiamin, Hexamethylendiamin, Trimethylhexamethylendiamin, m-Xylylendiamin mit enständigen Epoxiden, wie z. B. Propylenoxid, Hexenoxid oder mit Glycidylethern wie Phenylglycidylether, Ethylhexylglycidylether, Butylglycidylether oder mit Glycidylestern wie "Cardura E", oder mit ungesättigten Verbindungen wie Acrylnitril, Methacrylnitril. Die Umsetzung hat dabei so zu erfolgen, daß nur eine der vorhandenen zwei primären Aminogruppen alkyliert, d.h. den genannten Epoxiden oder ungesättigten Verbindungen umgesetzt wird. Zu diesem Zwecke wird die entsprechende Polyaminoverbindung im Überschuß eingesetzt. Selbstverständlich können auch Mischungen der Amine Verwendung finden.

Das molare Verhältnis der Komponenten (A) und (B) zueinander kann in einem breiten Bereich variiert werden. Besitzt die Komponente (B) pro Molekül eine primäre Aminogruppe, so kann das Verhältnis von Carbonatgruppen der Komponente (A) zu primären Aminogruppen der Komponente (B) 0,5/1 bis 1/0,5, insbesondere 0,8/1 bis 1/0,8 betragen. Besitzt die Komponente (B) pro Molekül zwei primäre Aminogruppen, so wird man die Komponente (B) im Überschuß einsetzen, um eine Vernetzung zu vermeiden. Das Verhältnis von Komponente (A) zu Komponente (B) kann beispielsweise 1 : 10, insbesondere 1 : 3 betragen.

Die Reaktion zur Herstellung der erfindungsgemäßen Umsetzungsprodukte kann in Substanz oder in Gegenwart eines inerten, d. h. die Reaktion nicht störenden Lösungs- oder Verdünnungsmittels vorgenommen werden. Als inerte Lösungsmittel kommen grundsätzlich die gleichen in Betracht, die sich für die Lösungspolymerisation zur Herstellung der Komponente (A) eignen (siehe weiter oben), also beispielsweise Ether, wie z. B. Diethylether, Tetrahydrofuran, Dioxan, 1.2-Dimethoxyethan, Diethylenglykoldimethylether, Alkohole, wie z.B. Ethanol, Butanol, Ethylenglykol; cycloaliphatische oder aromatische Kohlenwasserstoffe, wie Hexan, Heptan, Toluol oder Xylol; gut geeignet sind auch Lösungsmittel, wie Dimethylformamid und N-Methylpyrrolidon. Die Umsetzung der Komponenten (A) und (B) wird zweckmäßig im Temperaturbereich von 0 bis 150 °C, vorzugsweise von 40 bis 120 °C, insbesondere von 60 bis 120 °C durchgeführt.

Die erfindungsgemäßen aminogruppenhaltige Acrylatharze, deren Aminzahlen im allgemeinen zwischen 1 und 120, vorzugsweise 1 und 80 und insbesondere 2 und 50 liegen und deren Molekulargewicht $\overline{M}_w$ zumeist 1.000 bis 50.000, vorzugsweise 3.000 und 30.000 beträgt, stellen wertvolle Bindemittel, insbesondere für Anstrichmittel und Lacke, speziell Elektrotauchlacke dar, da sie nach Protonierung der basischen Gruppen mit organischen Säuren in wäßrigen Systemen verarbeitbar sind. Die erfindungsgemäßen Acrylatharze eignen sich aber auch als Bindemittel in konventionellen lösungsmittelhaltigen Lacksystemen. Sie können dabei, sofern sie die für die Vernetzung benötigten funktionellen Gruppen enthalten, als Alleinbindemittel verwendet werden (sog. selbstvernetzende Ein-Komponenten-Lacke).

Andererseits ist es aber auch möglich, dem erfindungsgemäßen Umsetzungsprodukt aus den Komponenten (A) und (B) übliche Härter zuzusetzen wie sie für fremdvernetzende Zwei-Komponentenlacke verwendet werden.

Für kalthärtende Zwei-Komponentenlacksysteme kommen beispielsweise unverkappte Polyisocyanate in Frage, wie die aus der Polyurethanchemie bekannten Verbindungen. Als geeignete Polyisocyanate seien hier genannt: aliphatische, cycloaliphatische oder aromatische Polyisocyanate sowie die aus Polyolen und Diisocyanaten erhältlichen N=C=O-haltigen Präpolymeren, sowie Urethan- und/oder Biuret- und/oder isocyanuratgruppenhaltige Polyisocyanate. Als bei Raumtemperatur wirksame Härterkomponente für diese aminogruppenhaltige Copolymerisate eignen sich aber auch epoxidgruppenhaltige Verbindungen, wie z. B. niedermolekulare Polyepoxide, epoxidgruppenhaltige Copolymerisate sowie Di- oder Polyglycidylether von aliphatischen oder aromatischen Alkoholen. Weiterhin sind hier als Härterkomponenten auch oligomere oder polymere Verbindungen zu nennen, welche mindestens zwei 1,3-Dioxolan-2-on-Gruppen pro Molekül enthalten; hierzu gehören beispielsweise die Verbindungen (A). Als bei Raumtemperatur härtende Verbindungen eignen sich vorliegend schließlich auch Verbindungen, die für eine Michael-Addition (oder nucleophile Addition) geeignete Doppelbindungen enthalten, wie z. B. Acrylsäureester oder Amide von Polyolen oder Polyamiden sowie Acrylsäureester von Copolymerisaten oder von Polykondensaten, wie sie beispielsweise in den DE-Patentanmeldungen P 35 08 399.9 und P 35 41 140.6 beschrieben werden.

Für bei Raumtemperatur lagerstabile Lacksysteme werden bevorzugt teil- oder vollverkappte Polyisocyanate verwendet, wie sie durch Reaktion der zuvorgenannten Polyisocyanate mit den hierfür bekannten Blockierungsmitteln (vgl. z. B. DE-Offenlegungsschrift 36 24 454) erhalten werden. Daneben eignen sich aber als Härter von lagerstabilen Lacksystemen auch $\beta$-Hydroxyester von mindestens bifunktionellen Polycarbonsäuren, Umsetzungsprodukte von Malonsäuredialkylestern mit Aldehyden und Ketonen, die unter Wasserabspaltung zu ungesättigten Dicarbonsäureestern reagieren (Knoevenagel'sche Synthese), Umesterungshärter sowie Michael-Additionsprodukte, beispielsweise wie sie in den DE-Offenlegungsschriften 33 15 469, 34 17 441 und 34 36 345 beschrieben sind, auf die hier Bezug genommen wird.

Nach der Applikation, die nach den üblichen Verfahren, wie Elektrotauchlackierung, Spritzen, Tauchen udgl. erfolgen kann, wird der Überzug je nach Art der Härtungskomponente bei Raumtemperatur oder bei erhöhten Temperaturen durch übliche Verfahren gehärtet, wobei Temperaturen von 10 bis 220 °C, vorzugsweise 20 bis 180 °C verwendet werden.

Um wäßrige Zubereitungen zu erhalten, ist es vorteilhaft, die basischen Aminogruppen teilweise oder vollständig zu neutralisieren, um damit Überzugsmassen zu erhalten, die aus wäßriger Lösung bei einem Bad-pH zwischen etwa 3 und 9 elektrisch abgeschieden werden können. Die Neutralisation der basischen Gruppen wird im allgemeinen mit wasserlöslichen Säuren, beispielsweise Ameisensäure, Essigsäure, Milchsäure oder Phosphorsäure vorgenommen. Die Menge der Säure hängt im Einzelfall von den Eigenschaften des verwendeten Harzes ab und wird im allgemeinen nur so weit durchgeführt, daß das Harz solubilisiert oder dispergiert wird. Die elektrische Ablagerung der Lackteilchen erfolgt nach bekannten Verfahren, worauf hier Bezug genommen wird. Die Abscheidung kann auf allen elektrisch leitenden Substraten erfolgen. z. B. Metall, wie Stahl, Kupfer, Aluminium und dergleichen.

Wäßrige Zubereitungen, die einen besonders niedrigen Gehalt an flüchtigen, organischen Lösungmitteln besitzen, erhält man beispielsweise durch Abdestillation der in den Bindemitteln von der Herstellung oder Lösung enthaltenen Lösungsmittel. Bevorzugt wird dieser Verfahrensschritt unter vermindertem Druck durchgeführt.

Den Lackzubereitungen können gegebenenfalls auch verschiedene Zusatzstoffe wie Lösungsmittel, Pigmente, Pigmentpasten, Antioxidantien, oberflächenaktive Mittel, Lösungsmittel, Verlauf- und Verdikkungsmittel, Reaktionsverdünner, Katalysatoren etc. zugegeben werden. Diese Zusatzstoffe sind bekannt und werden üblicherweise in der Lackindustrie eingesetzt.

Die mit den erfindungsgemäßen Umsetzungsprodukten (Bindemitteln) erhältlichen Härtungsprodukte zeichnen sich vor allem durch folgende Eigenschaften aus:
gute Lösemittelbeständigkeit; gute Witterungs- und Lichtstabilität (geringe Gilbungstendenz); gutes Haftvermögen auf Substraten; niedrige Härtungstemperaturen; gute mechanische Eigenschaften, wie hohe Werte für die (Pendel-)Härte auch schon nach kurzen Härtungszeiten.

Die Erfindung wird durch die nachstehenden Beispiele näher erläutert. Darin bedeuten T Gewichtsteile und ./. Gewichtsprozent.

Beispiele

I) Herstellung des erfindungsgemäßen Umsetzungsproduktes

Beispiel I.1

In einem mit Rührer, Rückflußkühler und Innenthermometer ausgestatteten Reaktionskolben wurden 150 Teile Diglykoldimethylether vorgelegt und auf 140 °C erhitzt.

Binnen 6 Stunden wurde bei gleicher Temperatur ein Gemisch bestehend aus 169 Teilen (2-Oxo-1,3-dioxolan-4-yl-)methylmethacrylat, 315 Teilen 2-Hydroxyethylmethyacrylat, 286 Teilen n-Butylmethacrylat, 172 Teilen Butylacrylat, 108 Teilen 2-Ethylhexylacrylat, 12 Teilen Di-t-butylperoxid und 10 Teilen Dodecylmercaptan zudosiert. Anschließend wurde eine Stunde nachpolymerisiert und mit 355 Teilen Diglykoldimethylether verdünnt. Binnen einer Stunde wurden anschließend bei 80 °C 107 Teile 2-Hydroxyethyl-1,3-propandiamin zudosiert und bis zu einer Aminzahl von 33 nachgerührt. Man erhielt eine klare Harzlösung mit einem Feststoffgehalt von 70 %.

Beispiel I.2

Es wurde wie in Beispiel I.1 gearbeitet, jedoch mit der Änderung, daß als Amin 79 Teile N-Methylpropandiamin verwendet wurden und bis zu einer Aminzahl von 31 nachgerührt wurde. Es wurde eine klare Harzlösung mit einem Feststoffgehalt von 69 % erhalten.

Beispiel I.3

In einem mit Rührer, Rückflußkühler und Innenthermometer ausgestatteten Reaktionskolben wurden 150 Teile Diglykoldimethylether vorgelegt und auf 155 °C erhitzt.

Binnen 6 Stunden wurde bei gleicher Temperatur ein Gemisch bestehend aus 169 Teilen (2-Oxo-1,3-dioxolan-4-yl)-methylmethacrylat, 315 Teilen 2-Hydroxyethylmethacrylat, 256 Teilen n-Butylmethacrylat, 142 Teilen Butylacrylat, 108 Teilen 2-Ethylhexylacrylat, 60 Teilen Styrol, 12 Teilen Di-t-butylperoxid und 10 Teilen Dodecylmercaptan zudosiert. Anschließend wurde eine Stunde nachpolymerisiert und mit 350 Teilen Diglykoldimethylether verdünnt. Binnen einer weiteren Stunde wurden anschließend bei 80 °C 107 Teile 2-Hydroxyethyl-1,3-propandiamin zudosiert und bis zu einer Aminzahl von 33 nachgerührt. Es wurde eine klare Harzlösung mit einem Feststoffgehalt von 70,5 % erhalten.

Beispiel I.4

Es wurde wie in Beispiel I.3 gearbeitet, jedoch mit der Änderung, daß als Amin 79 Teile N-Methylpropandiamin verwendet wurden und bis zu einer Aminzahl von 31 nachgerührt wurde. Man erhielt eine klare Harzlösung mit einem Feststoffgehalt von 69 %.

Beispiel I.5

In einem mit Rührer, Rückflußkühler und Innenthermometer ausgestatteten Reaktionskolben wurden 150 Teile Diglykoldimethylether und 2 Teile Di-t-butylperoxid vorgelegt und auf Siedetemperatur erhitzt. Binnen 6 Stunden wurde bei gleicher Temperatur ein Gemisch bestehend aus 149 Teilen (2-Oxo-1,3-dioxolan-4-yl-)-methylmethacrylat, 315 Teilen 2-Hydroxyethylmethacrylat, 296 Teilen n-Butylmethacrylat, 182 Teilen Butylacrylat, 108 Teilen 2-Ethylhexylacrylat, 10 Teilen Di-t-butylperoxid und 12 Teilen Dodecylmercaptan zudosiert. Anschließend wurde eine Stunde nachpolymerisiert und mit 345 Teilen Diglykoldimethylether verdünnt. Binnen einer weiteren Stunde wurden anschließend bei 80 °C 94 Teile 2-Hydoxyethyl-1,3-propandiamin zudosiert und bis zu einer Aminzahl von 29 nachgerührt. Man erhielt eine klare Harzlösung mit einem Feststoffgehalt von 70 %.

Beispiel I.6

Man arbeitete wie in Beispiel I.5 mit der Änderung, daß als Amin 70 Teile N-Methylpropandiamin verwendet wurden und bis zu einer Aminzahl von 28 nachgerührt wurde. Man erhielt eine klare Harzlösung mit einem Feststoffgehalt von 69 %.

Beispiel I.7 (selbstvernetzend)

222 Teile Isophorondiisocyanat und 0,5 Teile Zinkacetylacetonat wurden bei 50 °C binnen 2 Stunden mit einer Lösung von 124 Teilen $\epsilon$-Caprolactam in 150 Teilen Diglykoldimethylether versetzt. Danach wurde bei gleicher Temperatur bis zu einem Isocyanatgehalt von 7,6 % nachgerührt.

Anschließend wurde bei gleicher Temperatur eine Harzlösung, hergestellt wie in Beispiel I.1 beschrieben und bestehend aus 300 Teilen Diglykoldimethylether, 186 Teilen (2-Oxo-1,3-dioxolan-4-yl)-methylmethacrylat, 166 Teilen Butylacrylat, 190 Teilen Butylmethacrylat, 143 Teilen Hydroxyäthylmethacrylat, 8 Teilen Di.-tert.butyl-perbenzoat und 6 Teilen Dodecylmercaptan, binnen 2 Stunden zudosiert und bis zu einem Gehalt an freiem Isocyanat von < 0,1% nachgerührt. Binnen einer weiteren Stunde wurden dann 87 Teile N-Methyl 1,3-propandiamin zudosiert und bis zu einer Aminzahl von 35 nachgerührt. Man erhielt eine klare Lösung mit einem Feststoffgehalt von 72 %.

Beispiel I.8

In einem mit Rührer, Rückflußkühler und Innenthermometer ausgestatteten Reaktionskolben wurden 100 Teile Xylol vorgelegt und auf Siedetemperatur erhitzt. Binnen 6 Stunden wurde bei gleicher Temperatur ein Gemisch, bestehend aus 55 Teilen (2-Oxo-1,3-dioxolan-4-yl-) methylmethacrylat, 200 Teilen Methylmethacrylat, 70 Teilen 2-Ethylhexylacrylat, 175 Teilen Styrol, 4 Teilen Di-t-butylperoxid und 5 Teilen Dodecymercaptan zudosiert. Anschließend wurde eine Stunde nachpolymerisiert und mit 100 Teilen Xylol verdünnt. Binnen einer weiteren Stunde wurden anschließend bei 80 °C 234 Teile Trimethylhexamethylendiamin zudosiert. Nach 3 Stunden Rühren bei 80 °C wurde im Ölpumpenvakuum bei 120 °C das Lösungsmittel und

das überschüssige Amin abdestilliert. Der Rückstand wurde in einem Gemisch aus 100 Teilen n-Butylacetat aufgenommen. Man erhielt eine klare Harzlösung mit einem Feststoffgehalt von 72 % und einer Aminzahl von 25.

Beispiel I.9

In einem mit Rührer, Rückflußkühler und Innenthermometer ausgestatteten Reaktionskolben wurden 100 Teile Diglykoldimethylether vorgelegt und auf Siedetemperatur erhitzt. Binnen 6 h wurde bei gleicher Temperatur ein Gemisch bestehend aus 166 Teilen (2-Oxo-1,3-dioxolan-4-yl)-methylmethacrylat, 94,5 Teilen n-Butylmethacrylat, 89,5 Teilen Butylacrylat, 150 Teilen Styrol, 4 Teilen Di-t-butylperoxid und 5 Teilen Dodecylmercaptan zudosiert. Anschließend wurde eine Stunde nachpolymerisiert und mit 240 Teilen Diglykoldimethylether verdünnt. Binnen einer weiteren Stunde wurden anschließend bei 80°C 268 Teile Ethylendiamin zudosiert und 3 Stunden nachgerührt. Im Vakuum wurde anschließend das Lösungsmittel und das überschüssige Amin abdestilliert. Der Rückstand wurde in 400 Teilen Methoxypropanol aufgenommen.
Man erhielt eine klare Harzlösung mit einem Feststoffgehalt von 57 % und einer Aminzahl von 54.

Beispiel I.10

In einem mit Rührer, Rückflußkühler und Innenthermometer ausgestatteten Reaktionskolben wurden 240 Teile n-Butylglykol und 2 Teile Di-t-butylperoxid vorgelegt und auf 140° C erhitzt. Binnen 6 Stunden wurde bei gleicher Temperatur ein Gemisch bestehend aus 136 Teilen (2-Oxo-1,3-dioxolan-4-yl-)-methylmethacrylat, 288 Teilen 2-Hydroxyethylmethacrylat, 244 Teilen eines Methyacrylsäureester eines Alkohols mit überwiegend 13 Kohlenstoffatomen, 139 Teilen Butylacrylat, 98 Teilen 2-Ethylhexylacrylat, 55 Teilen Styrol, 10 Teilen Di-t-butylperoxid und 12 Teilen Dodecylmercaptan zudosiert. Anschließend wurde eine Stunde nachpolymerisiert und das Lösungsmittel abdestilliert. Nach Verdünnen mit 440 Teilen Methoxypropanol wurden binnen einer weiteren Stunde anschließend bei 80° C 86 Teile 2-Hydroxyethyl-1,3-propandiamin zudosiert und bis zu einer Aminzahl von 28 nachgeführt. Es wurde eine klare Harzlösung mit einem Feststoffgehalt von 70,5 % erhaltern.

Beispiel I.11

Es wurde wie in Beispiel I.10 gearbeitet, jedoch mit der Änderung, daß als Amin 64 Teile N-Methyl-1,3-propandiamin verwendet wurden. Es wurde eine klare Harzlösung mit einem Feststoffgehalt von 72 % und einer Aminzahl von 29 erhalten.

II) Herstellung des Härters

Beispiel II.1

666 Teile Isophorondiisocyanat, 0,7 Teile Zinkacetylacetonat und 486 Teile Diglykoldimethylether wurden in einer mit Rückflußkühler und Innenthermometer versehenen Rührapparatur auf 50°C erhitzt und portionsweise mit 127,3 Teilen Trimethylolpropan versetzt. Man ließ solange nachrühren, bis ein Isocyanatgehalt von 10,3 % erreicht war. Anschließend wurden bei 50°C 285 Teile $\epsilon$-Caprolactam portionsweise zugegeben. Nach Erreichen eines Isocyanatgehaltes von 2 % wurden bei Raumtemperatur 56 Teile Dimethylaminoethanol zugetropft und anschließend bis zu einem Gehalt an freiem Isocyanat von $< 0,2$ % nachgerührt. Man erhielt eine klare farblose Harzlösung mit einem Feststoffgehalt von 70 %.

Beispiel II.2

Wie in Beispiel II.1 beschrieben, wurde eine Härterkomponente bestehend aus 666 Teilen Isophorondiisocyanat, 127,3 Teilen Trimethylolpropan, 493 Teilen Diglykoldimethylether und 356 Teilen $\epsilon$-Caprolactom hergestellt. Der Härter hatte einen Feststoffgehalt von 70 %.

III Anwendungstechnische Beispiele

Allgemeine Herstellvorschrift des Elektrotauchlackes.

Das aminogruppenhaltige Copolymerisat wurde mit dem Härter und Dibutylzinndilaurat als Katalysator gemischt. Unter intensivem Rühren wurde anschließend mit Ameisensäure neutralisiert und langsam mit entionisiertem Wasser verdünnt. Der so erhaltene wäßrige Klarlack wurde nach einem Tag Rühren bei 25 ° C abgeschieden. Die erhaltenen Ergebnisse sind in Tabelle 1 zusammengefaßt.

Tabelle 1

| Tauchlack Nr. | 1 | 2 | 3 | 4 |
|---|---|---|---|---|
| Copolymerisat I.1 | 300 | -- | -- | -- |
| " I.2 | -- | 150 | -- | -- |
| " I.10 | -- | -- | 180 | -- |
| " I.11 | -- | -- | -- | 210 |
| Härter II.1 | 125 | -- | -- | 92 |
| " II.2 | -- | 64 | 75 | -- |
| Dibutylzinndilaurat | 10,5 | 5,1 | 6,3 | 7,6 |
| Ameisensäure (10 %) | 68 | 31 | 37 | 49 |
| entionisiertes Wasser | 1700 | 810 | 1130 | 1240 |
| Festkörper [Gew.%] | ca. 15 | ca. 16 | ca. 14 | ca. 15 |
| MEQ-Wert | ca. 50 | ca. 45 | ca. 45 | ca. 50 |
| pH-Wert | 5,8 | 6,0 | 6,1 | 6,0 |
| Badleitfähigkeit [$\mu Scm^{-1}$] | 1430 | 1140 | 1700 | 1620 |
| Abscheidespannung [V] | 100 | 100 | 150 | 150 |
| Einbrennbeding. ([°C]/[min]) | 170/20 | 180/15 | 160/30 | 170/30 |
| Filmstärke [µm] | 12 | 15 | 14 | 17 |

Es entstanden in allen Fällen glatte Filme mit einwandfreien Oberflächen, die keine Vergilbungen aufwiesen

**Patentansprüche**
**Patentansprüche für folgende Vertragsstaaten : AT, BE, CH, DE, FR, GB, IT, LI, NL**

1. Polymere Umsetzungsprodukte aus Verbindungen (A), die in statistischer Verteilung 1,3-Dioxolan-2-on Gruppen tragende Struktureinheiten (a) der Formel I

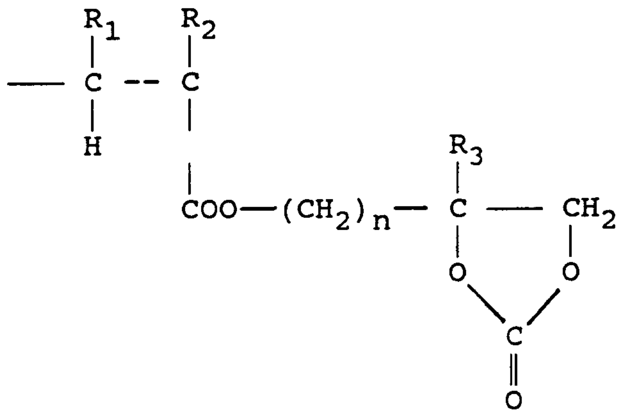

,

in der n für eine Zahl von 1 bis 6, $R_1$ für H, Alkyl oder COOR'' (R'' = Alkyl) stehen und $R_2$ unabhängig davon H oder Alkyl bedeutet und $R_3$ = H, Methyl oder Ethyl darstellt, oder 4-(2-Oxo-1,3-dioxolan-4-yl)methylitaconat enthalten, und Verbindungen (B), die mindestens eine primäre aliphatische oder cycloaliphatische Aminogruppe und zusätzlich mindestens eine weitere basische Aminogruppe enthalten, wobei diese polymeren Umsetzungsprodukte in mindestens einem organischen Lösemittel, ausgewählt aus Ethern, Alkoholen, cycloaliphatischen, aliphatischen und aromatischen Kohlenwasserstoffen, Ketonen, Estern, Dimethylformamid und N-Methylpyrrolidon, klarlöslich sind.

2. Polymere Umsetzungprodukte gemäß Anspruch 1, dadurch gekennzeichnet, daß die Verbindungen (A) zusätzlich zu den die 1,3-Dioxolan-2-on-Gruppen tragenden Struktureinheiten (a) noch Struktureinheiten (b) inthalten, die sich ableiten von mindestens einem der Monomeren aus der Gruppe ($b_1$) Olefine, ($b_2$) vinylaromatische Monomere, ($b_3$) hydroxyl- oder glycidylgruppenhaltige Ester von ungesättigten Mono- oder Dicarbonsäuren, ($b_4$) Ester, Amide, Nitrile von ungesättigten Mono- oder Dicarbonsäuren, ($b_5$) polymerisierbare Ester von gesättigten Monocarbonsäuren, ($b_6$) Vinylether, ($b_7$) Monomere mit verkappten Isocyanatgruppen.

3. Polymere Umsetzungsprodukte gemäß Anspruch 2, dadurch gekennzeichnet, daß es sich bei ($b_2$) um Styrol, bei ($b_3$) um Hydroxyethyl(meth)acrylat, bei ($b_4$) um Methyl(meth)acrylat, Butyl(meth)acrylat oder 2-Ethylhexyl(meth)acrylat, bei ($b_5$) um Vinylacetat oder den Vinylester der Versaticsäure, und bei ($b_7$) um Vinylurethane handelt.

4. Polymere Umsetzungsprodukte gemäß einem oder mehreren der Ansprüche 1 bis 3, dadurch gekennzeichnet, daß es sich bei den Verbindungen (A) um folgende Copolymere handelt:
(2-Oxo-1,3-dioxolan-4-yl)methyl(meth)acrylat/2-Hydroxyethyl(meth)acrylat/Butyl(meth)acrylat/Ethylhexyl-(meth)acrylat;
(2-Oxo-1,3-dioxolan-4-yl)methyl(meth)acrylat/2-Hydroxyethyl(meth)acrylat/Butyl(meth)acrylat/Ethylhexyl-(meth)acrylat/Styrol;
4-(2-Oxo-1,3-dioxolan-4-yl)methylitaconat/2-Hydroxyethyl(meth)-acrylat/Butyl(meth)acrylat/Ethylhexyl-(meth)acrylat;
4-(2-Oxo-1,3-dioxolan-4-yl)methylitaconat/2-Hydroxyethyl(meth)-acrylat/Butyl(meth)acrylat/Ethylhexyl-(meth)acrylat/Styrol;
(2-Oxo-1,3-dioxolan-4-yl)methylmaleat/2-Hydroxyethyl(meth)-acrylat/Butyl(meth)acrylat/Ethylhexyl-(meth)acrylat;

5. Polymere Umsetzungsprodukte gemäß einem oder mehreren der Ansprüche 1 bis 5, dadurch gekennzeichnet, daß die Verbindung (A), aus 2 bis 80 Gew.-% an Struktureinheiten (a) der Formel I oder 4-(2-Oxo-1,3-dioxolan-4-yl)methylitaconat und 98 bis 20 Gew.-%, jeweils bezogen auf (A), an Struktureinheiten (b) besteht.

**6.** Polymere Umsetzungsprodukte gemäß einem oder mehreren der Ansprüche 1 bis 5, dadurch gekennzeichnet, daß die Verbindungen (A) zusätzlich noch Struktureinheiten (c) enthalten, die verkappte Isocyanatgruppen tragen.

**7.** Polymere Umsetzungsprodukte gemäß einem oder mehreren der Ansprüche 1 bis 6, dadurch gekennzeichnet, daß es bei den Verbindungen (B) um solche der allgemeinen Formel (II)

$H_2N-(R_3NH)_m-R_4$ (II)

handelt, in der
m und n gleich Null oder eine ganze Zahl von 1 bis 6 ist,
$R_3$ einen zweiwertigen, nichtaromatischen Kohlenwasserstoffrert mit 2 bis 18 C-Atomen darstellt und
$R_4$ für H oder

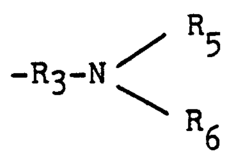

steht, worin $R_3$ die gleiche Bedeutung hat wie vorstehend und
$R_5$, $R_6$ entweder unabhängig voneinander für H, $(C_1-C_{20})$Alkyl, Hydroxy$(C_1-C_{16})$alkyl, vorzugsweise

$$-CH_2-CH(OH)-R_6 \; (R_6 = H, (C_1-C_{12})Alkyl, -CH_2-O-(C_{1-12})Alkyl,$$

$$-CH_2-O-Aryl, \; CH_2-O-C(=O)-(C_{1-12})Alkyl)$$

$$\text{oder } CH_2-CH(R_7)-CN \; (R_7 = H, (C_1-C_6)Alkyl)$$

stehen oder
$R_5$ und $R_6$ Teil eines 5-, 6- oder 7-gliedrigen aliphatischen Ringes sind, mit der Maßgabe, daß bei m gleich Null $R_4$ nicht gleich H ist.

**8.** Polymere Umsetzungsprodukte gemäß Anspruch 7, dadurch gekennzeichnet, daß m in der Formel (II) gleich Null ist, $R_3$ einen Alkylenrest mit 2 bis 10 C-Atomen bedeutet und $R_5/R_6$ jeweils für H stehen.

**9.** Verwendung der polymeren Umsetzungsprodukte gemäß einem oder mehreren der Ansprüche 1 bis 8, gegebenenfalls mit zusätzlichen Härtern, als Bestandteil in Lacken.

**10.** Verwendung nach Anspruch 9, dadurch gekennzeichnet, daß es sich bei den Lacken um Elektrotauchlacke handelt.

**11.** Verwendung nach Anspruch 9, dadurch gekennzeichnet, daß es sich bei den Lacken um bei Raumtemperatur härtende 2-Komponenten-Lacke handelt.

**Patentansprüche für folgenden Vertragsstaat : ES**

1. Verfahren zur Herstellung von polymeren Umsetzungsprodukten, die in mindestens einem organischen Lösemittel, ausgewählt aus Ethern, Alkoholen, cycloaliphatischen, aliphatischen und aromatischen Kohlenwasserstoffen, Ketonen, Estern, Dimethylformamid und N-Methylpyrrolidon, klarlöslich sind, dadurch gekennzeichnet, daß man Verbindungen (A), die in statistischer Verteilung 1,3-Dioxolan-2-on Gruppen tragende Struktureinheiten (a) der Formel I

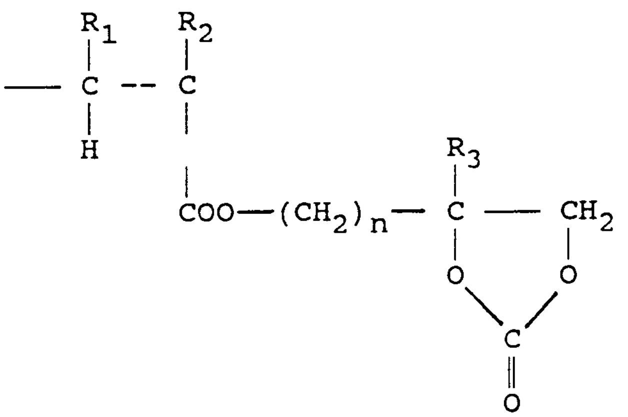

,

in der n für eine Zahl von 1 bis 6, $R_1$ für H, Alkyl oder COOR'' (R'' = Alkyl) stehen und $R_2$ unabhängig davon H oder Alkyl bedeutet und $R_3$ = H, Methyl oder Ethyl darstellt,
oder 4-(2-Oxo-1,3-dioxolan-4-yl)methylitaconat enthalten, und
Verbindungen (B), die mindestens eine primäre aliphatische oder cycloaliphatische Aminogruppe und zusätzlich mindestens eine weitere basische Aminogruppe enthalten, umsetzt.

2. Verfahren gemäß Anspruch 1, dadurch gekennzeichnet, daß die Reaktion in Gegenwart eines inerten Lösungs- oder Verdünnungsmittels erfolgt.

3. Verfahren gemäß Anspruch 1 und/oder 2, dadurch gekennzeichnet, daß die Reaktion im Temperaturbereich von 0 bis 150 °C durchgeführt wird.

4. Verfahren gemäß mindestens einem der Ansprüche 1 bis 3, dadurch gekennzeichnet, daß die Verbindungen (A) zusätzlich zu den die 1,3-Dioxolan-2-on-Gruppen tragenden Struktureinheiten (a) noch Struktureinheiten (b) enthalten, die sich ableiten von mindestens einem der Monomeren aus der Gruppe ($b_1$) Olefine, ($b_2$) vinylaromatische Monomer, ($b_3$) hydroxyl- oder glycidylgruppenhaltige Ester von ungesättigten Mono- oder Dicarbonsäuren, ($b_4$) Ester, Amide, Nitrile von ungesättigten Mono- oder Dicarbonsäuren, ($b_5$) polymerisierbare Ester von gesättigten Monocarbonsäuren, ($b_6$) Vinylether, ($b_7$) Monomere mit verkappten Isocyanatgruppen.

5. Verfahren gemäß Anspruch 4, dadurch gekennzeichnet, daß es sich bei ($b_2$) um Styrol, bei ($b_3$) um Hydroxyethyl(meth)acrylat, bei ($b_4$) um Methyl(meth)acrylat, Butyl(meth)acrylat oder 2-Ethylhexyl-(meth)acrylat, bei ($b_5$) um Vinylacetat oder den Vinylester der Versaticsäure, und bei ($b_7$) um Vinylurethane handelt.

6. Verfahren gemäß mindestens einem der Ansprüche 1 bis 5, dadurch gekennzeichnet, daß es sich bei den Verbindungen (A) um folgende Copolymere handelt:
2-(Oxo-1,3-dioxolan-4-yl)methyl(meth)acrylat/2-Hydroxyethyl(meth)acrylat/Butyl(meth)acrylat/Ethylhexyl-(meth)acrylat;
2-(Oxo-1,3-dioxolan-4-yl)methyl(meth)acrylat/2-Hydroxyethyl(meth)acrylat/Butyl(meth)acrylat/Ethylhexyl-(meth)acrylat/Styrol;
4-(2-Oxo-1,3-dioxolan-4-yl)methylitaconat/2-Hydroxyethyl(meth)-acrylat/Butyl(meth)acrylat/Ethylhexyl-(meth)acrylat;
4-(2-Oxo-1,3-dioxolan-4-yl)methylitaconat/2-Hydroxyethyl(meth)-acrylat/Butyl(meth)acrylat/Ethylhexyl-

(meth)acrylat/Styrol;
4-(2-Oxo-1,3-dioxolan-4-yl)methylmaleat/2-Hydroxyethyl(meth)-acrylat/Butyl(meth)acrylat/Ethylhexyl-(meth)acrylat.

7. Verfahren gemäß mindestens einem der Ansprüche 1 bis 6, dadurch gekennzeichnet, daß die Verbindung (A) aus 2 bis 80 Gew.-% an Struktureinheiten (a) der Formel I oder 4-(2-Oxo-1,3-dioxolan-4-yl)methyllitaconat und 98 bis 20 Gew.-%, jeweils bezogen auf (A), an Struktureinheiten (b) besteht.

8. Verfahren gemäß mindestens einem der Ansprüche 1 bis 7, dadurch gekennzeichnet, daß die Verbindungen (A) zusätzlich noch Struktureinheiten (c) enthalten, die verkappte Isocyanatgruppen tragen.

9. Verfahren gemäß mindestens einem der Ansprüche 1 bis 8, dadurch gekennzeichent, daß ist bei den Verbindungen (B) um solche der allgemeinen Formel (II)

$H_2N-(R_3NH)_m-R_4$ (II)

handelt, in der
m und n gleich Null oder eine ganze Zahl von 1 bis 6 ist,
$R_3$ einen zweiwertigen, nichtaromatischen Kohlenwasserstoffrest mit 2 bis 18 C-Atomen darstellt und
$R_4$ für H oder

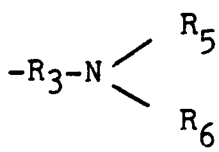

steht, worin $R_3$ die gleiche Bedeutung hat wie vorstehend und
$R_5$, $R_6$ entweder unabhängig voneinander für H, $(C_1-C_{20})$Alkyl, Hydroxy$(C_1-C_{16})$alkyl, vorzugsweise

$$-CH_2-\underset{OH}{CH}-R_6 \; (R_6 = H,\ (C_1-C_{12})\text{Alkyl},\ -CH_2-O-(C_{1-12})\text{Alkyl},$$

$$-CH_2-O-\text{Aryl},\ CH_2-O-\underset{O}{\overset{\|}{C}}-(C_1-_{12})\text{Alkyl})$$

$$\text{oder } CH_2-\underset{R_7}{CH}-CN \; (R_7 = H, (C_1-C_6)\text{Alkyl})$$

stehen oder
$R_5$ und $R_6$ Teil eines 5-, 6- oder 7-gliedrigen aliphatischen Ringes sind, mit der Maßgabe, daß bei m gleich Null $R_4$ nicht gleich H ist.

10. Verfahren gemäß Anspruch 9, dadurch gekennzeichnet, daß m in der Formel (II) gleich Null ist, $R_3$ einen Alkylenrest mit 2 bist 10 C-Atomen bedeutet und $R_5/R_6$ jeweils für H stehen.

11. Verwendung der polymeren Umsetzungsprodukte, erhalten nach mindestens einem der Ansprüche 1 bis 10, gegebenenfalls mit zusätzlichen Härtern, als Bestandteil in Lacken.

12. Verwendung nach Anspruch 11, dadurch gekennziechnet, daß es sich bei den Lacken um Elektrotauchlacke handelt.

13. Verwendung nach Anspruch 11, dadurch gekennzeichnet, daß es sich bei den Lacken um bei Raumtemperatur härtende 2-Komponenten-Lacke handelt.

**Claims**

**Claims for the following Contracting States : AT, BE, CH, DE, FR, GB, IT, LI, NL**

1. Polymeric reaction products obtained from compounds (A) containing, in random distribution, structural units (a) which respond to the general formula I and carry 1,3-dioxolan-2-one groups

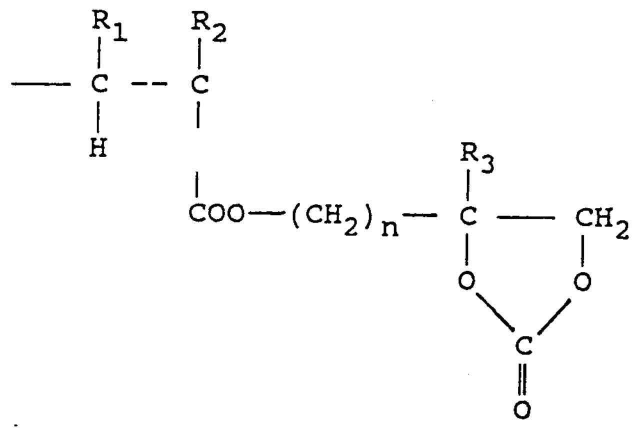

(I)

in which formula
n denotes a number from 1 to 6,
$R_1$ denotes H, alkyl or COOR" (R" = alkyl),
$R_2$ independently thereof denotes H or alkyl,
$R_3$ denotes H, methyl or ethyl,
or containing, in random distribution, 4-(2-oxo-1,3-dioxolan-4-yl)methyl-itaconate, and from compounds (B) containing at least one primary aliphatic or cycloaliphatic amino group and additionally at least one further basic amino group, it being possible to obtain clear solutions from these polymeric reaction products in at least one organic solvent selected from the group including ethers, alcohols, cycloaliphatic, aliphatic and aromatic hydrocarbons, ketones, esters, dimethylformamide and N-methylpyrrolidone.

2. Polymeric reaction products as claimed in claim 1, wherein the compounds (A) also contain, in addition to the structural units (a) carrying the 1,3-dioxolan-2-one groups, structural units (b) which are derived from at least one of the monomers from the group comprising ($b_1$) olefins, ($b_2$) vinyl aromatic monomers, ($b_3$) esters, containing hydroxyl groups or glycidyl groups, of unsaturated mono- or dicarboxylic acids, ($b_4$) esters, amides or nitriles of unsaturated mono- or dicarboxylic acids, ($b_5$) polymerizable esters of unsaturated monocarboxylic acids, ($b_6$) vinyl ethers and ($b_7$) monomers having blocked isocyanate groups.

3. Polymeric reaction products as claimed in claim 2, wherein ($b_2$) is styrene, ($b_3$) is hydroxyethyl (meth)-acrylate, ($b_4$) is methyl (meth)acrylate, butyl (meth)acrylate or 2-ethylhexyl (meth)acrylate, ($b_5$) is vinyl acetate or the vinyl ester of versatic acid and ($b_7$) is a vinyl urethane.

4. Polymeric reaction products as claimed in one or more of claims 1 to 3, wherein the compounds (A) are selected from the following copolymers:
(2-oxo-1,3-dioxolan-4-yl)methyl (meth)acrylate/2-hydroxyethyl (meth)acrylate/butyl (meth)-acrylate/ethylhexyl (meth)acrylate;
(2-oxo-1,3-dioxolan-4-yl)-methyl (meth)acrylate/2-hydroxyethyl (meth)acrylate/butyl (meth)-acrylate/ethylhexyl (meth)acrylate/styrene;
4-(2-oxo-1,3-dioxolan-4-yl)-methyl itaconate/2-hydroxyethyl (meth)acrylate/butyl (meth)-acrylate/ethylhexyl (meth)acrylate;
4-(2-oxo-1,3-dioxolan-4-yl)-methyl itaconate/2-hydroxyethyl (meth)acrylate/butyl (meth)-acrylate/ethylhexyl (meth)acrylate/styrene;
(2-oxo-1,3-dioxolan-4-yl)-methyl maleate/2-hydroxyethyl (meth)acrylate/butyl (meth)acrylate/ethylhexyl (meth)acrylate.

5. Polymeric reaction products as claimed in one or more of claims 1 to 5, wherein the compound (A) comprises 2 to 80 % by weight of structural units (a) responding to formula I or of 4-(2-oxo-1,3-dioxolan-4-yl)-methyl itaconate and 98 to 20 % by weight of structural units (b), the percentages being related to (A) in each case.

6. Polymeric reaction products as claimed in one or more of claims 1 to 5, wherein compounds (A) additionally also contain structural units (c) which carry blocked isocyanate groups.

7. Polymeric reaction products as claimed in one or more of claims 1 to 6, wherein the compounds (B) are compounds of the formula (II)

$H_2N-(R_3NH)_m-R_4$ (II)

in which
m and n are zero or an integer from 1 to 6,
$R_3$ is a divalent, non-aromatic hydrocarbon radical having 2 to 18 carbon atoms and
$R_4$ is H or

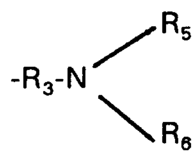 ,

where $R_3$ is as defined above, and
$R_5$ and $R_6$ either are, independently of one another, H, $(C_1-C_{20})$-alkyl, hydroxy-$(C_1-C_{16})$-alkyl, perferably

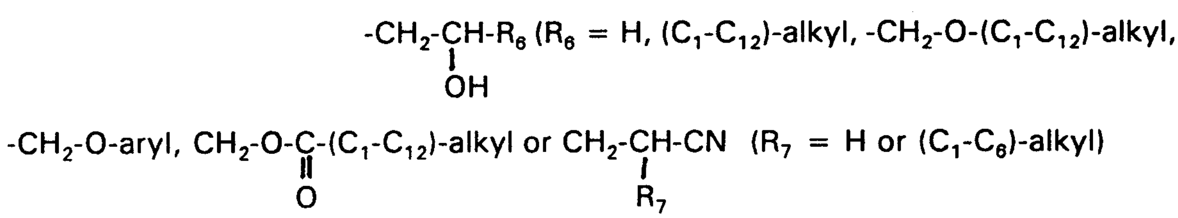

or
$R_5$ and $R_6$ are part of a 5-membered, 6-membered or 7-membered aliphatic ring, with the proviso that, if m is zero, $R_4$ is other than H.

8. Polymeric reaction products as claimed in claim 7, wherein m in the formula (II) is zero, $R_3$ is an alkylene radical having 2 to 10 carbon atoms and $R_5/R_6$ are each H.

9. The use of the polymeric reaction products as claimed in one or more of claims 1 to 8, if appropriate with additional curing agents, as constituents in coatings.

10. The use as claimed in claim 9, wherein the coatings are electrodip coatings.

11. The use as claimed in claim 9, wherein the coatings are 2-component coatings which cure at room temperature.

**Claims for the following Contracting State : ES**

1. Process for the preparation of polymeric reaction products which can be dissolved in at least one of the solvents selected from the group including ethers, alcohols, cycloaliphatic, aliphatic and aromatic hydrocarbons, ketones, esters, dimethyl formamide and N-methylpyrrolidone, to give clear solutions, wherein compounds (A) containing, in random distribution, structural units (a) carrying 1,3-dioxolan-2-one groups and responding to the general formula I

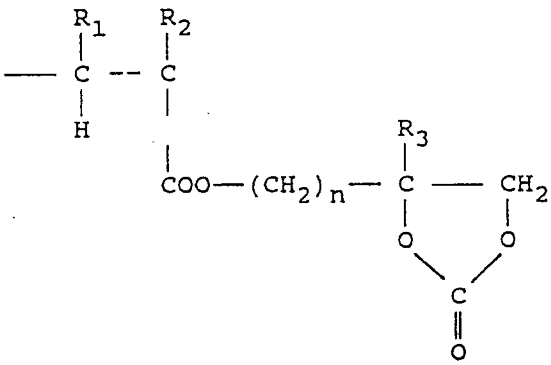

(I)

in which
n denotes a number from 1 to 6,
$R_1$ denotes H, alkyl or COOR" (R" = alkyl),
$R_2$, independently thereof, denotes H or alkyl,
$R_3$ denotes H, methyl or ethyl,
or containing, in random distribution, 4-(2-oxo-1,3-dioxolan-4-yl)methyl-itaconate, are reacted with compounds (B) containing at least one primary aliphatic or cycloaliphatic amino group and additionally at least one further basic amino group.

**2.** The process as claimed in claim 1, wherein the reaction is performed in the presence of an inert solvent or diluent.

**3.** The process as claimed in claim 1 and/or 2, wherein the reaction is performed at a temperature within the range of 0 to 150 °C.

**4.** The process as claimed in at least one of claims 1 to 3, wherein the compounds (A) also contain, in addition to the structural units (a) carrying the 1,3-dioxolan-2-one groups, structural units (b) which are derived from at least one of the monomers from the group comprising ($b_1$) olefins, ($b_2$) vinyl aromatic monomers, ($b_3$) esters, containing hydroxyl groups or glycidyl groups, of unsaturated mono- or dicarboxylic acids, ($b_4$) esters, amides or nitriles of unsaturated mono- or dicarboxylic acids, ($b_5$) polymerizable esters of unsaturated monocarboxylic acids, ($b_6$) vinyl ethers and ($b_7$) monomers having blocked isocyanate groups.

**5.** The process as claimed in claim 4, wherein ($b_2$) is styrene, ($b_3$) is hydroxyethyl (meth)acrylate, ($b_4$) is methyl (meth)acrylate, butyl (meth)acrylate or 2-ethylhexyl (meth)acrylate, ($b_5$) is vinyl acetate or the vinyl ester of versatic acid and ($b_7$) is a vinyl urethane.

**6.** The process as claimed in at least one of claims 1 to 5, wherein the compounds (A) are selected from the following copolymers:
(2-oxo-1,3-dioxolan-4-yl)methyl (meth)acrylate/2-hydroxyethyl (meth)acrylate/butyl (meth)-acrylate/ethylhexyl (meth)acrylate;
(2-oxo-1,3-dioxolan-4-yl)-methyl (meth)acrylate/2-hydroxyethyl (meth)acrylate/butyl (meth)-acrylate/ethylhexyl (meth)acrylate/styrene;
4-(2-oxo-1,3-dioxolan-4-yl)-methyl itaconate/2-hydroxyethyl (meth)acrylate/butyl (meth)-acrylate/ethylhexyl (meth)acrylate;
4-(2-oxo-1,3-dioxolan-4-yl)-methyl itaconate/2-hydroxyethyl (meth)acrylate/butyl (meth)-acrylate/ethylhexyl (meth)acrylate/styrene;
(2-oxo-1,3-dioxolan-4-yl)-methyl maleate/2-hydroxyethyl (meth)acrylate/butyl (meth)acrylate/ethylhexyl (meth)acrylate.

**7.** The process as claimed in at least one of claims 1 to 6, wherein compounds (A) are comprised of 2 to 80 % by weight of structural units (a) responding to formula I or of 4-(2-oxo-1,3-dioxolan-4-yl)-methyl-itaconate and of 98 to 20 % by weight of structural units (b), each relative to (A).

**8.** The process as claimed in at least one of claims 1 to 7, wherein compounds (A) additionally also contain structural units (c) which carry blocked isocyanate groups.

**9.** The process as claimed in at least one or more of claims 1 to 8, wherein the compounds (B) are compounds of the formula (II)

$H_2N-(R_3NH)_m-R_4$ (II)

in which
m and n are zero or an integer from 1 to 6,
$R_3$ is a divalent, non-aromatic hydrocarbon radical having 2 to 18 carbon atoms and
$R_4$ is H or

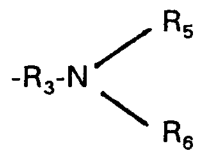 ,

where $R_3$ is as defined above, and
$R_5$ and $R_6$ either are, independently of one another, H, $(C_1-C_{20})$-alkyl, hydroxy-$(C_1-C_{16})$-alkyl, preferably

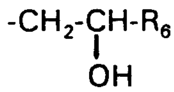 ($R_6$ = H, $(C_1-C_{12})$-alkyl, $-CH_2-O-(C_1-C_{12})$-alkyl,

$-CH_2-O-$aryl, 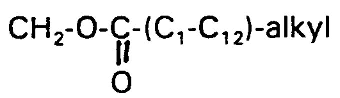 or 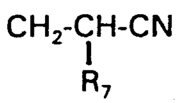 ($R_7$ = H or $(C_1-C_6)$-alkyl)

or
$R_5$ and $R_6$ are part of a 5-membered, 6-membered or 7-membered aliphatic ring, with the proviso that, if m is zero, $R_4$ is other than H.

**10.** The process as claimed in claim 9, wherein m in the formula (II) is zero, $R_3$ is an alkylene radical having 2 to 10 carbon atoms and $R_5/R_6$ are each H.

**11.** The use of the polymeric reaction products as claimed in at least one of claims 1 to 10, if appropriate with additional curing agents, as constituents in coatings.

**12.** The use as claimed in claim 11, wherein the coatings are electrodip coatings.

**13.** The use as claimed in claim 11, wherein the coatings are 2-component coatings which cure at room temperature.

**Revendications**
**Revendications pour les Etats contractants suivants : AT, BE, CH, DE, FR, GB, IT, LI, NL**

**1.** Produits polymères obtenus par la réaction de composés (A), qui contiennent selon une répartition statistique des motifs structuraux (a) portant des groupes dioxolanne-1,3-one-2 de formule I :

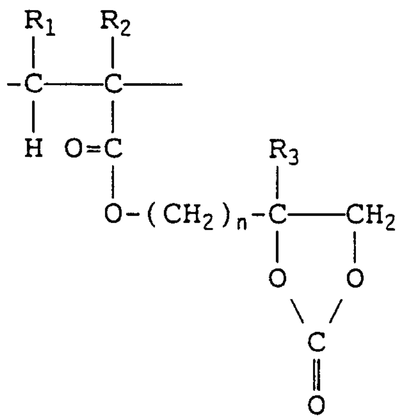

(I)

dans laquelle n est un nombre de 1 à 6, $R_1$ est H ou un radical alkyle ou COOR" (R" est un radical alkyle), et $R_2$, indépendamment de $R_1$, est H ou un radical alkyle, et $R_3$ est H ou le radical méthyle ou éthyle,
ou encore contiennent l'itaconate de (oxo-2 dioxolanne-1,3 yl-4) méthyle, et
de composés (B), qui contiennent au moins un groupe amino primaire aliphatique ou cycloaliphatique et de plus au moins un autre groupe amino basique, ces produits de réaction polymères étant solubles, pour donner une solution limpide, dans au moins un solvant organique choisi parmi l'ensemble comprenant les éthers, les alcools, les hydrocarbures cycloaliphatiques, aliphatiques et aromatiques, les cétones, les esters, le diméthylformamide et la N-méthylpyrrolidone.

**2.** Produits de réaction polymères selon la revendication 1, caractérisés en ce que les composés (A) contiennent, outre les motifs structuraux (a) portant des groupes dioxolanne-1,3 one-2, des motifs structuraux (b), qui dérivent d'au moins un monomère choisi parmi l'ensemble comprenant les groupes ($b_1$) oléfines, ($b_2$) monomères vinylaromatiques, ($b_3$) esters hydroxylés ou glycidylés d'acides mono- ou dicarboxyliques insaturés, ($b_4$) esters, amides, nitriles d'acides mono- ou dicarboxyliques insaturés, ($b_5$) esters polymérisables d'acides monocarboxyliques saturés, ($b_6$) éthers vinyliques, ($b_7$) monomères comportant des groupes isocyanate coiffés.

**3.** Produits de réaction polymères selon la revendication 2, caractérisés en ce que le composant ($b_2$) est le styrène, le composant ($b_3$) est le (méth)acrylate d'hydroxyéthyle, le composant ($b_4$) est le (méth)-acrylate de méthyle, le (méth)acrylate de butyle ou le (méth)acrylate d'éthyl-2 hexyle, le composant ($b_5$) est l'acétate de vinyle ou l'ester vinylique de l'acide versatique, et le composant ($b_7$) est constitué de vinyluréthannes.

**4.** Produits de réaction polymères selon l'une ou plusieurs des revendications 1 à 3, caractérisés en ce que, pour ce qui est des composés (A), il s'agit des copolymères suivants :
(méth)acrylate de (oxo-2 dioxolanne-1,3 yl-4) méthyle/(méth)acrylate d'hydroxy-2 éthyle/(méth)acrylate de butyle/((méth)acrylate d'éthylhexyle ;
(méth)acrylate de (oxo-2 dioxolanne-1,3 yl-4) méthyle/(méth)acrylate d'hydroxy-2 éthyle/(méth)acrylate de butyle/(méth)acrylate d'éthylhexyle/styrène ;
itaconate-4 de (oxo-2 dioxolanne-1,3 yl-4) méthyle/(méth)acrylate d'hydroxy-2 éthyle/(méth)acrylate de butyle/(méth)acrylate d'éthylhexyle ;
itaconate-4 de (oxo-2 dioxolanne-1,3 yl-4) méthyle/(méth)acrylate d'hydroxy-2 éthyle/(méth)acrylate de butyle/(méth)acrylate d'éthylhexyle/styrène ;
maléate de (oxo-2 dioxolanne-1,3 yl-4) méthyle/(méth)acrylate d'hydroxy-2 éthyle/(méth)acrylate de butyle/(méth)acrylate d'éthylhexyle.

**5.** Produits de réaction polymères selon l'une ou plusieurs des revendications 1 à 4, caractérisés en ce que le composé (A) est constitué de 2 à 80 % en poids de motifs structuraux (a) de formule (I) ou d'itaconate-4 de (oxo-2 dioxolanne-1,3 yl-4) méthyle, et de 98 à 20 % en poids, par rapport au composé (A), de motifs structuraux (b).

6. Produits de réaction polymères selon l'une ou plusieurs des revendications 1 à 5, caractérisés en ce que les composés (A) contiennent encore des motifs structuraux (c) qui portent des groupes isocyanate coiffés.

7. Produits de réaction polymères selon l'une ou plusieurs des revendications 1 à 6, caractérisés en ce que, pour ce qui est des composés (B), il s'agit de composés de formule générale (II) :

$H_2N\text{-}(R_3NH)_m\text{-}R_4$ (II)

dans laquelle :

| | |
|---|---|
| m et n | sont nuls ou représentent chacun un nombre entier de 1 à 6, |
| $R_3$ | est un résidu hydrocarboné non aromatique divalent ayant de 2 à 18 atomes de carbone, et |
| $R_4$ | est H ou |

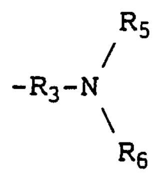

où $R_3$ a les mêmes significations que ci-dessus, et $R_5$ et $R_6$, indépendamment l'un de l'autre, représentent chacun H ou un radical alkyle en $C_1$-$C_{20}$, hydroxyalkyle en $C_1$-$C_{16}$, de préférence $-CH_2-CH(OH)-R_6$ ($R_6$ est H ou un radical alkyle en $C_1$-$C_{12}$, $-CH_2-O-$(alkyle $C_1$-$C_{12}$), $-CH_2-O-$aryle ou $CH_2-O-C(=O)-$(alkyle en $C_1$-$C_{12}$)), ou $CH_2-CH(R_7)-CN$ ($R_7$ est H ou un radical alkyle en $C_1$-$C_6$), ou bien $R_5$ et $R_6$ forment ensemble une partie d'un noyau aliphatique à 5, 6 ou 7 chaînons, du moment que $R_4$ n'est pas un hydrogène quand m est nul.

8. Produits de réaction polymères selon la revendication 7, caractérisés en ce que m, dans la formule (II), est nul, que $R_3$ est un résidu alkylène ayant de 2 à 10 atomes de carbone, et que $R_5$ et $R_6$ sont chacun un hydrogène.

9. Utilisation des produits de réaction polymères selon l'une ou plusieurs des revendications 1 à 8, éventuellement avec des durcisseurs supplémentaires, en tant que constituants de peintures et vernis.

10. Utilisation selon la revendication 9, caractérisée en ce que, pour ce qui est des peintures et vernis, il s'agit de peintures pour électrodéposition.

11. Utilisation selon la revendication 9, caractérisée en ce que, pour ce qui est des peintures et vernis, il s'agit de peintures à deux composants durcissant à la température ambiante.

**Revendications pour l'Etat contractant suivant : ES**

1. Procédé pour préparer des produits de réaction polymères, qui sont solubles en donnant une solution limpide dans au moins un solvant organique choisi parmi les éthers, les alcools, les hydrocarbures cycloaliphatiques, aliphatiques et aromatiques, les cétones, les esters, le diméthylformamide et la N-méthylpyrrolidone, caractérisé en ce qu'on fait réagir des composés (A), qui contiennent selon une répartition statistique des motifs structuraux (a) portant des groupes dioxolanne-1,3-one-2 de formule I :

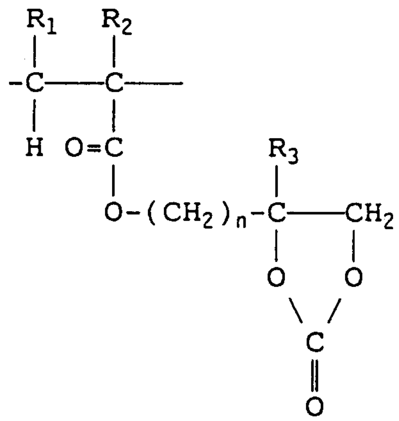

(I)

dans laquelle n est un nombre de 1 à 6, $R_1$ est H ou un radical alkyle ou COOR" (R" est un radical alkyle), et $R_2$, indépendamment de $R_1$, est H ou un radical alkyle, et $R_3$ est H ou le radical méthyle ou éthyle,
ou encore contiennent l'itaconate de (oxo-2 dioxolanne-1,3 yl-4) méthyle, et
des composés (B), qui contiennent au moins un groupe amino primaire aliphatique ou cycloaliphatique et de plus au moins un autre groupe amino basique.

**2.** Procédé selon la revendication 1, caractérisé en ce que la réaction est mise en oeuvre en présence d'un solvant ou d'un diluant inerte.

**3.** Procédé selon les revendications 1 et/ou 2, caractérisé en ce que la réaction est mise en oeuvre à une température comprise entre 0 et 150 °C.

**4.** Procédé selon au moins l'une des revendications 1 à 3, caractérisé en ce que les composés (A) contiennent, outre les motifs structuraux (a) portant des groupes dioxolanne-1,3 one-2, des motifs structuraux (b), qui dérivent d'au moins un monomère choisi parmi l'ensemble comprenant les groupes ($b_1$) oléfines, ($b_2$) monomères vinylaromatiques, ($b_3$) esters hydroxylés ou glycidylés d'acides mono- ou dicarboxyliques insaturés, ($b_4$) esters, amides, nitriles d'acides mono- ou dicarboxyliques insaturés, ($b_5$) esters polymérisables d'acides monocarboxyliques saturés, ($b_6$) éthers vinyliques, ($b_7$) monomères comportant des groupes isocyanate coiffés.

**5.** Procédé selon la revendication 4, caractérisé en ce que le composant ($b_2$) est le styrène, le composant ($b_3$) est le (méth)acrylate d'hydroxyéthyle, le composant ($b_4$) est le (méth)acrylate de méthyle, le (méth)acrylate de butyle ou le (méth)acrylate d'éthyl-2 hexyle, le composant ($b_5$) est l'acétate de vinyle ou l'ester vinylique de l'acide versatique, et le composant ($b_7$) est constitué de vinyluréthannes.

**6.** Procédé selon au moins l'une des revendications 1 à 5, caractérisé en ce que, pour ce qui est des composés (A), il s'agit des copolymères suivants :
(méth)acrylate de (oxo-2 dioxolanne-1,3 yl-4) méthyle/(méth)acrylate d'hydroxy-2 éthyle/(méth)acrylate de butyle/((méth)acrylate d'éthylhexyle ;
(méth)acrylate de (oxo-2 dioxolanne-1,3 yl-4) méthyle/(méth)acrylate d'hydroxy-2 éthyle/(méth)acrylate de butyle/(méth)acrylate d'éthylhexyle/styrène ;
itaconate-4 de (oxo-2 dioxolanne-1,3 yl-4) méthyle/(méth)acrylate d'hydroxy-2 éthyle/(méth)acrylate de butyle/(méth)acrylate d'éthylhexyle ;
itaconate-4 de (oxo-2 dioxolanne-1,3 yl-4) méthyle/(méth)acrylate d'hydroxy-2 éthyle/(méth)acrylate de butyle/(méth)acrylate d'éthylhexyle/styrène ;
maléate de (oxo-2 dioxolanne-1,3 yl-4) méthyle/(méth)acrylate d'hydroxy-2 éthyle/(méth)acrylate de butyle/(méth)acrylate d'éthylhexyle.

**7.** Procédé selon au moins l'une des revendications 1 à 6, caractérisé en ce que le composé (A) est constitué de 2 à 80 % en poids de motifs structuraux (a) de formule (I) ou d'itaconate-4 de (oxo-2 dioxolanne-1,3 yl-4) méthyle, et de 98 à 20 % en poids, par rapport au composé (A), de motifs structuraux (b).

**8.** Procédé selon au moins l'une des revendications 1 à 7, caractérisé en ce que les composés (A) contiennent encore des motifs structuraux (c) qui portent des groupes isocyanate coiffés.

**9.** Procédé selon au moins l'une des revendications 1 à 8, caractérisé en ce que, pour ce qui est des composés (B), il s'agit de composés de formule générale (II) :

$H_2N\text{-}(R_3NH)_m\text{-}R_4$ (II)

dans laquelle :

| | |
|---|---|
| m et n | sont nuls ou représentent chacun un nombre entier de 1 à 6, |
| $R_3$ | est un résidu hydrocarboné non aromatique divalent ayant de 2 à 18 atomes de carbone, et |
| $R_4$ | est H ou |

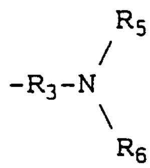

où $R_3$ a les mêmes significations que ci-dessus, et $R_5$ et $R_6$, indépendamment l'un de l'autre, représentent chacun H ou un radical alkyle en $C_1$-$C_{20}$, hydroxyalkyle en $C_1$-$C_{16}$, de préférence $-CH_2-CH(OH)-R_6$ ($R_6$ est H ou un radical alkyle en $C_1$-$C_{12}$, $-CH_2-O-$ (alkyle $C_1$-$C_{12}$), $-CH_2-O-$aryle ou $CH_2-O-C(=O)-$(alkyle en $C_1$-$C_{12}$)), ou $CH_2-CH(R_7)-CN$ ($R_7$ est H ou un radical alkyle en $C_1$-$C_6$), ou bien

$R_5$ et $R_6$ forment ensemble une partie d'un noyau aliphatique à 5, 6 ou 7 chaînons, du moment que $R_4$ n'est pas un hydrogène quand m est nul.

**10.** Procédé selon la revendication 9, caractérisé en ce que m, dans la formule (II), est nul, que $R_3$ est un résidu alkylène ayant de 2 à 10 atomes de carbone, et que $R_5$ et $R_6$ sont chacun un hydrogène.

**11.** Utilisation des produits de réaction polymères selon l'une ou plusieurs des revendications 1 à 10, éventuellement avec des durcisseurs supplémentaires, en tant que constituants de peintures et vernis.

**12.** Utilisation selon la revendication 11, caractérisée en ce que, pour ce qui est des peintures et vernis, il s'agit de peintures pour électrodéposition.

**13.** Utilisation selon la revendication 11, caractérisée en ce que, pour ce qui est des peintures et vernis, il s'agit de peintures à deux composants durcissant à la température ambiante.